# EUROPÄISCHE PATENTANMELDUNG

(11) **EP 2 042 707 A1**
(43) Veröffentlichungstag der Anmeldung: **01.04.2009**
(21) Anmeldenummer: 07018977.4
(22) Anmeldetag: 26.09.2007
(51) Int. Cl.: F02C 7/18

(54) **Stationäre Gasturbine zur Energieerzeugung**

(71) Anmelder: Siemens Aktiengesellschaft, 80333 München (DE)
(72) Erfinder: Cornelius, Christian, Dr., 45549 Sprockhövel (DE); Hofmann, Markus, 44581 Castrop-Rauxel (DE); Krüzfeldt, Joachim, 45481 Mülheim an der Ruhr (DE); Maghon, Hans, 45481 Mülheim an der Ruhr (DE); Janssen, Stefan, Dr., 45147 Essen (DE); Shevchenko, Vadim, 44265 Dortmund (DE)

(57) **Zusammenfassung**

Es wird eine Gasturbine (10) für die stationäre Energieerzeugung vorgestellt, die einen Verdichter, mehrere, konzentrisch um die Maschinenachse (22) angeordnete Rohrbrennkammern (12) und eine Turbineneinheit aufweist, wobei mehrere Kühlluftentnahmekanäle (38) zur Entnahme von in der Turbineneinheit verwendeten Kühlluft vorgesehen sind, deren Entnahmeöffnungen (42) dem Verdichterdiffusorausgang (28) gegenüberliegen. Um eine verlängerte Lebensdauer von Kühlluftentnahmekanälen (38) zu erreichen und zudem deren Schwingungsanregungen zu verhindern, ist vorgesehen, dass in gleicher Anzahl der Kühlluftentnahmekanäle (38) mehrere konzentrisch um die Maschinenachse (22) angeordnete Stützen (40) vorgesehen sind, deren inneres Ende (44) jeweils an einer inneren Wand (18) des Verdichterdiffusorausgangs (28) befestigt ist, wobei jede Entnahmeöffnung (42) im Bereich des Verdichterdiffusorausgangs (28) vorgesehen ist und ein Teil der Stütze (40) ist.

## Beschreibung

Die Erfindung betrifft eine Gasturbine für die stationäre Energieerzeugung, umfassend:
- entlang einer Maschinenachse angeordnet einen Verdichter mit einem ringförmigen Verdichterdiffusor für verdichtete Luft, mindestens eine Brennkammer und eine Turbineneinheit,
- mehrere konzentrisch um die Maschinenachse angeordnete, sich im Wesentlichen entlang der Maschinenachse erstreckende Kühlluftentnahmekanäle zur Entnahme von in der Turbineneinheit verwendbarer Kühlluft, wobei die Kühlluftentnahmekanäle jeweils eine Entnahmeöffnung aufweisen.

Gattungsgemäße Gasturbinen sind aus dem allgemeinen Stand der Technik bekannt. Eine eine Ringbrennkammer aufweisende Gasturbine offenbart die Offenlegungsschrift DE 196 39 623 A1. Die darin gezeigte Gasturbine weist einen sich am Verdichterausgang anschließenden Austrittsdiffusor auf, der eingangsseitig als Axialdiffusor ausgebildet ist und der austrittsseitig eine Umlenkung für verdichte Luft von annähernd 135° Grad herbeiführt. Hierzu ist vorgesehen, dass der Diffusor entsprechend gekrümmte Diffusorinnenwände und Diffusoraußenwände aufweist. Zudem ist in der offenbarten Gasturbine ein Kühlluftentnahmerohr vorgesehen, welches sich vom Umlenkbereich des Austrittsdiffusors durch diesen hindurch bis zu dem Verdichterausgang erstreckt. Die somit vergleichsweise weit durch den Austrittsdiffusor hindurchragenden Kühlluftentnahmerohre stören die an ihnen vorbeiströmende verdichtete Luft und führen somit zu Strömungsverlusten. Des Weiteren besteht die Gefahr, dass die lediglich im Umlenkbereich einseitig befestigten Kühlluftentnahmerohre zu Schwingungsanregungen neigen und bei fortgesetztem Schwingen vor dem Erreichung ihrer geplanten Lebensdauer verschleißen. Als Verschleißerscheinungen können Risse in den Kühlluftentnahmerohren auftreten, die zu Abbrüchen der frei auskragenden Rohrenden führen können.

Die dann in der Gasturbine lose angeordneten Bruchteile können zu weiteren Defekten führen. Außerdem ist das Einströmen bzw. die Entnahme von in der Turbine zur Kühlung vorgesehener Verdichterluft gestört. In diesem Fall würde dann nicht mehr an einer radial gesehen mittigen Position des ringförmigen Verdichterausgangs die Kühlluft entnommen, sondern im Bereich der Umlenkung. Aufgrund der Massenträgheit der in der Luft mitgeführten Partikel strömen dann vermehrt Schmutzpartikel in die Kühlluft, wodurch die nachgeordneten Kühlluftleitungssysteme sowie die zu kühlenden Bauteile einer besonders starken Verschmutzung ausgesetzt wären. Diese Verschmutzungen können zu Blockaden in dem Kühlluftleitungssystem und in den zu kühlenden Bauteilen führen, was insgesamt die Kühlwirkung schwächen kann. Die verminderte Kühlwirkung kann im schlimmsten Fall zu einem Versagen von mit Heißgas beaufschlagten Bauteilen führen.

Aufgabe der Erfindung ist daher die Bereitstellung einer Gasturbine für die stationäre Energieerzeugung, bei der in besonders zuverlässiger Art und Weise mit einer besonders hohen Effizienz der zur Kühlung am meisten geeignete Luftstrom dem gesamten Verdichtermassenstrom entnommen werden kann.

Zur Lösung dieser Aufgabe wird eine Gasturbine der eingangs genannten Art angegeben, bei der mindestens in gleicher Anzahl zu den Kühlluftentnahmekanälen mehrere, konzentrisch um die Maschinenachse angeordnete Stützen vorgesehen sind, deren inneres Ende jeweils an einer inneren Wand des Ausgangs des Verdichterdiffusors befestigt ist, wobei jede Entnahmeöffnung im Bereich eines Ausgangs des Verdichterdiffusors vorgesehen und ein Teil einer der Stützen ist.

Mit der Erfindung wird erstmalig vorgeschlagen, die Kühlluftentnahmekanäle entnahmeseitig mit konzentrisch um die Maschinenachse angeordneten, entlang des Umfangs verteilten Stützen zu verbinden. Ein Ende der Kühlluftentnahmekanäle ist somit jeweils Teil einer der Stützen. Die Entnahmeöffnungen der Kühlluftentnahmekanäle sind derartig in den Stützen angeordnet, dass diese dem Verdichterdiffusorausgang gegenüber liegen. Somit kann eine besonders einfache Entnahme sowie eine besonders zuverlässige Entnahme von Kühlluft aus dem gesamten Verdichtermassenstrom angegeben werden. Lediglich einseitig eingespannte Entnahmerohre, wie beim Stand der Technik, werden somit vermieden. Gemäß der Erfindung sind die Rohre beidseitig befestigt. Ferner sind mindestens in gleicher Anzahl zu den Kühlluftentnahmekanälen Stützen vorgesehen, die die innere Wand bzw. die innere Schale des Verdichterdiffusors tragen. Hierfür sind die inneren Enden der Stützen im Bereich des Verdichterdiffusorausgangs mit der inneren Wand verbunden. Dabei kann die radiale Position der Entnahmeöffnung so am Austritt des Verdichterdiffusors gewählt sein, dass zum einen ein möglichst hoher Staudruck und damit ein maximaler Versorgungsdruck für zur Kühlung der ersten Turbinenleitreihe verwendete Kühlluft bereitsteht. Zum anderen wird die Position so festgelegt, dass eine möglichst geringe Belastung der Entnahmeluft mit Schmutzpartikeln erreicht werden kann. Bekanntermaßen ist die Schmutzpartikelkonzentration der Verdichterdiffusorströmung in den wandnahen Bereichen größer als im dazwischen liegenden zentraleren Bereich. Folglich ist die radiale Position der Entnahmeöffnungen so gewählt, dass diese im mittleren Bereich zwischen innerer und äußerer Wand des Verdichterdiffusors vorgesehen sind. Insbesondere hierdurch kann eine besonders reine, d.h. mit besonders wenigen Schmutzpartikeln belastete Kühlluft dem Verdichtermassenstrom entnommen werden. Zudem kann durch die Anordnung der Entnahmekanäle in den sogenannten Nachlaufgebieten der Stützen zusätzliche Verluste in der verbliebenen Hauptströmung minimiert werden. Insgesamt ergibt sich somit eine aerodynamisch optimierte Konstruktion mit einer verlustminimierten Führung der Hauptströmung im Bereich stromab des Diffusoraustritts bei gleichzeitig optimaler Versorgung der Turbinenleitschaufeln mit Kühlluft. Zudem ist die Konstruktion sehr robust.

Vorteilhafte Ausgestaltungen sind in den Unteransprüchen angegeben.

Zweckmäßigerweise liegt die Entnahmeöffnung dem Verdichterdiffusorausgang gegenüber. Die Kühlluftentnahmekanäle sind radial weiter innen angeordnet als die mindestens eine Brennkammer.

Vorzugsweise ist vorgesehen, dass die Entnahmeöffnung mittels eines Aufsatzes gebildet ist und/oder im Kühlluftentnahmekanal ein Adapterstück zur Drosselung vorgesehen ist. Durch die Verwendung eines anströmseitig angeordneten Aufsatzes besteht die Möglichkeit, ohne wesentliche Änderung der Konstruktion eine definierte Einströmgeschwindigkeit für entnommene Kühlluft einzustellen. Außerdem kann die radiale Position der Entnahme besonders reiner Kühlluft mit einem besonders geringen Staubpartikelanteil geringfügig angepasst werden, ohne dass eine wesentliche Konstruktionsänderung erforderlich ist. Hierzu sind jeweils nur unterschiedliche und entsprechend der Aufgabe angepasste Aufsätze zu verwenden. Mit dem optional vorgesehenen Adapterstück kann auch eine Drosselung der entnommenen Kühlluftmenge erreicht werden.

In vorteilhafterweise kann der Kühlluftentnahmekanal entweder als Entnahmerohr ausgebildet sein. Die Verwendung von Entnahmerohren führt zu einer vergleichsweise kostengünstigen Konstruktion. Oder die innere Wand kann sich über den Verdichterdiffusorausgang hinaus in Richtung der Turbineneinheit erstrecken und der Kühlluftentnahmekanal kann an der nach außen gewandten Fläche der inneren Wand oder innerhalb der inneren Wand angeordnet sein. Sofern der Kühlluftentnahmekanal entlang seiner Erstreckung mit der inneren Wand verbunden ist, kann eine besonders gegen Eigenschwingungen sichere Konstruktion angegeben werden

Zur Abstützung der die Entnahmeöffnungen aufweisenden Enden der Kühlluftentnahmekanäle und zur weiteren Befestigung der Stütze ist das äußere Ende der Stütze an einem sich entlang der Maschinenachse erstreckenden Ausleger befestigt. Der Ausleger ist andererseits am Gehäuse der Gasturbine befestigt und somit in der Lage die innere Wand des Verdichterdiffusors mittelbar abzustützen.

Vorteilhafter Weise sind die Entnahmerohre im Bereich der Stützen aufgedickt. Hierdurch kann eine größere Festigkeit der Verbindung von Rohren und Stützen erreicht werden.

Die Erfindung kann besonders vorteilhaft bei Gasturbinen angewendet werden, die eine Anzahl von konzentrisch um die Maschinenachse angeordneten Rohrbrennkammern aufweisen. Die Anzahl von Kühlluftentnahmekanälen und Rohrbrennkammern kann dann beispielsweise identisch sein. Insbesondere hierdurch kann eine symmetrische und somit preiswerte Konstruktion einer Gasturbine angegeben werden.

In einer besonders vorteilhaften Ausgestaltung ist der Verdichterdiffusor als Axialdiffusor mit im Wesentlichen gradlinigen, inneren und äußeren Wänden ausgebildet, die sich divergierend in Richtung der Maschinenachse erstrecken. Im Gegensatz zum Stand der Technik ist eine Umlenkung des vom Verdichter bereitgestellten Luftstroms in die Radialrichtung nicht erforderlich, da gemäß einer vorteilhaften Weiterbildung die Gasturbine mit einer Anzahl von Rohrbrennkammern ausgestattet ist, die konzentrisch um die Maschinenachse verteilt sind. Da zwischen den Rohrbrennkammern freie Bereiche vorhanden sind, kann die aus dem Verdichterdiffusorausgang austretende Verdichterluft in diese freie Bereiche ungehindert einströmen. Die auf die Rohrbrennkammern auftreffende Verdichterluft kann diese zusätzlich kühlen. Eine Umlenkung der gesamten Hauptströmung wie beim Stand der Technik ist nicht erforderlich.

Weitere Merkmale und Vorteile werden anhand einer schematischen Darstellung näher erläutert. Es zeigen:
- FIG 1: eine perspektivische Darstellung des Innenraums einer Gasturbine im Bereich einer Rohrbrennkammer gemäß einer ersten Ausgestaltung der Erfindung und
- FIG 2: eine Ausschnitt durch den Längsschnitt durch eine Gasturbine gemäß einer zweiten Ausgestaltung.

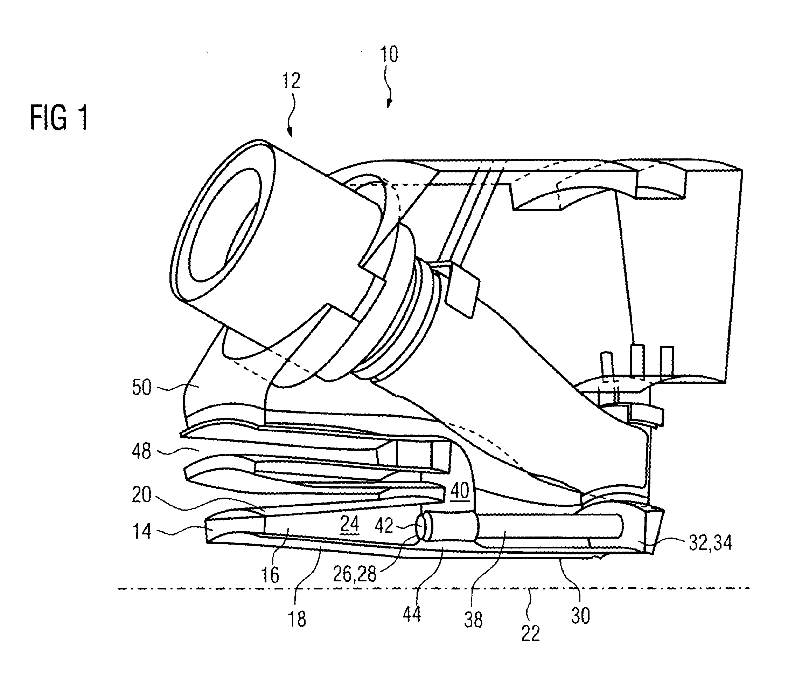

Das Innere einer Gasturbine 10 im Bereich ihrer Rohrbrennkammer 12 ist in FIG 1 perspektivisch dargestellt. Die Gasturbine 10 umfasst einen nicht weiter dargestellten Axialverdichter mit einem ringförmigen Verdichterausgang 14, an dem sich ein Verdichterdiffusor 16 anschließt. Der Verdichterdiffusor 16 umfasst im Wesentlichen eine ringförmige innere Wand 18 und eine ringförmige äußere Wand 20, welche sich im Wesentlichen gradlinig - bezogen auf eine Maschinenachse 22 - jedoch gegenüber dieser geringfügig geneigt erstrecken und dabei einen divergierenden Diffusorkanal 24 einschließen. Das dem Verdichterausgang 14 gegenüberliegende Ende 26 des Verdichterdiffusors 16 wird als Verdichterdiffusorausgang 28 bezeichnet. Dieser ist als ringförmige Öffnung zwischen der inneren Wand 18 und der äußeren Wand 20 ausgebildet.

Die innere Wand 18 erstreckt sich über den Verdichterdiffusorausgang 28 hinaus in Richtung einer in der Figur weiter rechts vorgesehenen, jedoch nicht im Detail dargestellten Turbineneinheit. Die innere Wand 18 wird auch als Wellenabdeckung 30 bezeichnet. Das turbinenseitige Ende 32 der Wellenabdeckung 30 geht in einen Flansch 34 über, in dem einerseits die inneren Enden der Leitschaufeln des ersten Turbinenleitschaufelkranzes festgelegt sind. Andererseits sind in dem Flansch 34 entlang des Umfangs verteilte, konzentrisch um die Maschinenachse 22 angeordnete Kühlluftentnahmekanäle 38 vorgesehen. Bei der in FIG 1 dargestellten Ausgestaltung von Kühlluftentnahmekanälen 38 handelt es sich beispielsweise um Kühlluftentnahmerohre. Deren turbinenseitiges Ende ist im Flansch 34 befestigt. Die Entnahmerohre kommunizieren mit einem Kühlkanalsystem, durch welches das in den Entnahmerohren strömende Kühlmittel dem Kühlsystem der Leitschaufeln der ersten Turbinenstufe zuführbar ist. Das dem Flansch 34 gegenüberliegende Ende der Kühlluftentnahmerohre ist Teil einer Stütze 40 und liegt dem Verdichterdiffusorausgang 28 gegenüber. Mit anderen Worten das dem Verdichter zugewandte Ende des Kühlluftentnahmerohrs endet in der Stütze 40. Dabei ist die Entnahmeöffnung 42 des Entnahmerohrs an oder in derjenigen Seite der Stütze 40 vorgesehen, welche dem Verdichterdiffusorausgang 28 unmittelbar zugewandt ist.

Die radiale Position der Entnahmeöffnung 42 ist so gewählt, dass sie mittig zwischen der inneren Wand 18 und der äußeren Wand 20 des Verdichterdiffusors 16 angeordnet ist. Hierdurch wird erreicht, dass derjenige Teil, der durch den Verdichterdiffusor 16 strömenden Verdichterluft als Kühlluft entnommen werden kann, die geringste Partikelkonzentration aufweist. Prinzipiell weist nämlich die entlang der inneren Wand 18 und der äußeren Wand 20 strömende Verdichterluft einen größeren Anteil an Schmutzpartikel auf, als die - radial gesehen - dazwischen strömende Mittenströmung.

Das radial innere Ende 44 der Stütze 40 ist an der inneren Wand 18 bzw. an der Wellenabdeckung 30 befestigt. Das äußere Ende jeder Stütze 40 ist mit jeweils einem sich entlang der Maschinenachse 22 erstreckenden Ausleger 48 verbunden, der andererseits am Gehäuse 50 der Gasturbine befestigt ist. Auch die Ausleger 48 sind somit über den Umfang gleichmäßig verteilt. Je nach Anforderung kann die äußere Wand 20 des Verdichterdiffusors 16 auch mit der Stütze 40 verbunden sein oder nicht.

Da das Kühlluftentnahmerohr sowohl verdichterseitig in der Stütze 40 als auch turbinenseitig im Flansch 34 eingespannt ist, ist eine besonders zuverlässige Befestigung des Kühlluftentnahmerohrs gegeben. Eine Schwingungsanregung, wie bei den aus dem Stand der Technik bekannten einseitig eingespannten Kühlluftentnahmerohren, ist nicht möglich. Defekte und Schadensfälle am Kühlluftentnahmekanal können somit sicher vermieden werden. Die vorbestimmte Lebensdauer kann somit erreicht werden.

Es hat sich als besonders vorteilhaft herausgestellt, wenn die Gasturbinen eine Anzahl von konzentrisch um die Maschinenachse angeordneten Rohrbrennkammern 12 aufweist. Aufgrund dieser Tatsache ist die Umlenkung von aus dem Verdichterdiffusor 16 austretender Hauptströmung in radialer Richtung nicht erforderlich. Demnach kann der Verdichterdiffusor 16 als Axialdiffusor ausgebildet sein. Prinzipiell kann aber auch der Einsatz der Erfindung bei einer Gasturbine mit Ringbrennkammer erfolgen.

Aufgrund der Anordnung der Entnahmeöffnung 42 in der Stütze 40 wird ein hoher Staudruck im Bereich unmittelbar stromauf der Stütze 40 erzeugt, wodurch ein maximaler Versorgungsdruck der zur Kühlung der ersten Turbinenleitreihe vorgesehenen Verdichterluft erreicht werden kann. Insbesondere dadurch ist gewährleistet, dass die Leitschaufeln der ersten Turbinenstufe mit einem ausreichend hohen Kühlluftdruck versorgt werden, so dass ein Heißgaseinzug in den zwischen den Turbinenleitschaufeln der ersten Stufe vorhandenen Spalte oder in die Ausblasöffnungen der Turbinenleitschaufeln nicht stattfinden kann.

Dementsprechend kann in zuverlässiger Art und Weise ein durch Heißgaseinzug verursachter Schadensfall sicher vermieden werden.

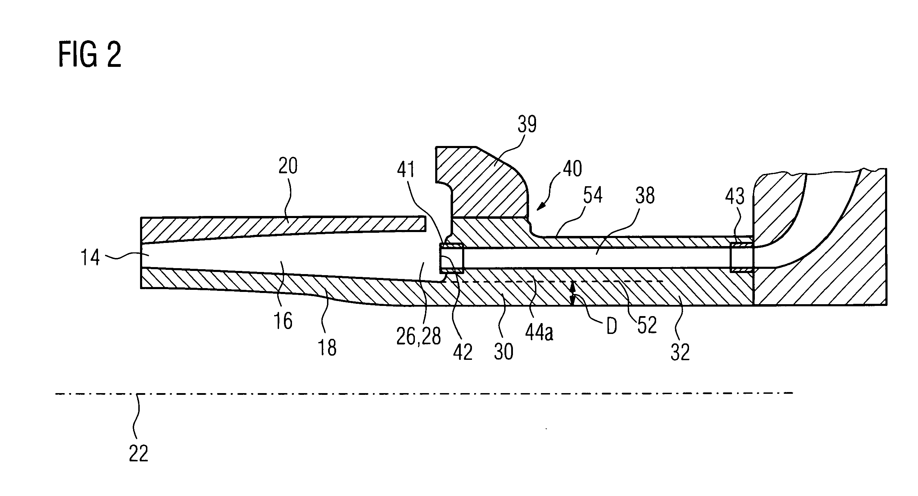

Eine zweite, identisch wirkende Ausgestaltung der Erfindung ist in FIG 2 dargestellt, wobei hier nur ein Ausschnitt aus dem Längsschnitt durch eine Gasturbine 10 im Bereich des Verdichterdiffusors 16 und der Stütze 40 gezeigt ist. In FIG 2 sind die zu FIG 1 identischen Bauteile mit identischen Bezugszeichen versehen.

Anstelle des in FIG 1 gezeigten separaten Entnahmerohres ist der Kühlluftentnahmekanal 38 gemäß der zweiten Ausgestaltung Teil der inneren Wand 18. Exakter gesagt, der Kühlluftentnahmekanal 38 ist in demjenigen Abschnitt der inneren Wand 18 vorgesehen, welcher stromab des Verdichterdiffusorausgangs 28 angeordnet ist. Hierzu kann der Kühlluftentnahmekanal 38 in die innere Wand 18 des Verdichterdiffusors 16 integriert sein. Um dies zu ermöglichen, ist die innere Wand 18 - in Umfangsrichtung betrachtet - an denjenigen Stellen aufgedickt, an denen ein Kühlluftentnahmekanal 38 vorgesehen ist. Die Aufdickung 54 ermöglicht, die innere Wand 18 in diesem Abschnitt hohl auszuführen, so dass der Hohlraum als Kühlluftentnahmekanal 38 dienen kann. Diejenigen Stellen der inneren Wand 18, welche - in Umfangsrichtung betrachtet - zwischen zwei benachbarten Kühlluftentnahmekanälen 38 angeordnet sind, weisen im Abschnitt zwischen dem Verdichterdiffusorausgang 28 und der Turbineneinheit die verringerte Wandstärke D auf.

Ferner ist anströmseitig des Kühlluftentnahmekanals 38 ein Aufsatz 41 angeordnet. Durch unterschiedliche Aufsätze 41 kann ohne wesentliche Änderung der Konstruktion eine Veränderung des entnommenen Massenstroms vorgenommen werden. Gleichzeitig kann mit dem Aufsatz 41 eine definierte Einströmgeschwindigkeit festgelegt werden. Abströmseitig ist im Kühlluftentnahmekanal 38 ein Adapterstück 43 zur Drosselung vorgesehen, falls die Drosselung von Kühlluft erforderlich sein sollte bzw. aufgrund verringerter Kühlanforderungen seitens der Turbine möglich ist.

Alternativ zu der vollständigen Integration des Kühlluftentnahmekanals 38 in die innere Wand 18 ist auch denkbar, dass der Kühlluftentnahmekanal 38 an der nach außen gewandten Fläche 52 der inneren Wand 18 angeordnet ist. Beispielweise könnte das Entnahmerohr entlang seiner Erstreckung unter Verwendung einer Unterbauung an die innere Wand 18 angeschweißt sein.

Die zweite Ausgestaltung ist insgesamt noch weniger Störanfällig in Bezug auf Schwingungsanregung, da der Kühlluftentnahmekanal 38 entlang seiner Erstreckung mit der inneren Wand fest verbunden ist.

Um eine bessere Herstellbarkeit zu erreichen, ist der äußere Teil 39 der Stütze 40 auf das entnahmeseitige Ende des Kühlluftentnahmekanals 38 angeschweißt, wobei das innere Ende 44a der Stütze 40 von der Aufdickung 54 gebildet ist.

Insgesamt wird mit der Erfindung eine Gasturbine 10 für die stationäre Energieerzeugung angegeben, die einen Verdichter, mehrere, konzentrisch um die Maschinenachse 22 angeordnete Rohrbrennkammern 12 und eine Turbineneinheit aufweist, wobei mehrere Kühlluftentnahmekanäle 38 zur Entnahme von in der Turbineneinheit verwendeten Kühlluft vorgesehen sind, deren Entnahmeöffnungen 42 dem Verdichterdiffusorausgang 28 gegenüberliegen. Um eine verlängerte Lebensdauer von Kühlluftentnahmekanälen 38 zu erreichen und zudem deren Schwingungsanregungen zu verhindern, ist vorgesehen, dass in gleicher Anzahl zu den Kühlluftentnahmekanälen 38 mehrere konzentrisch um die Maschinenachse 22 angeordnete Stützen 40 vorgesehen sind, deren inneres Ende 44 jeweils an einer inneren Wand 18 des Verdichterdiffusorausgangs 28 befestigt ist, wobei jede Entnahmeöffnung 42 im Bereich des Verdichterdiffusorausgangs 28 vorgesehen ist und ein Teil der Stütze 40 ist. Selbstverständlich können über den Umfang auch mehr Stützen als Kühlluftentnahmekanäle 38 vorgesehen sein.

## Patentansprüche

1. Gasturbine (10) für die stationäre Energieerzeugung, umfassend:
- entlang einer Maschinenachse (22) angeordnet einen Verdichter mit einem ringförmigen Verdichterdiffusor (16) für verdichtete Luft, mindestens eine Brennkammer (12) und eine Turbineneinheit,
- mehrere konzentrisch um die Maschinenachse (22) angeordnete, sich im Wesentlichen entlang der Maschinenachse (22) erstreckende Kühlluftentnahmekanäle (38) zur Entnahme von in einer Turbineneinheit verwendbaren Kühlluft, wobei die Kühlluftentnahmekanäle (38) jeweils eine Entnahmeöffnung (42) aufweisen,
**dadurch gekennzeichnet, dass**
mindestens in gleicher Anzahl zu den Kühlluftentnahmekanälen (38) mehrere konzentrisch um die Maschinenachse (22) angeordnete Stützen (40) vorgesehen sind, deren inneres Ende (44) jeweils an einer inneren Wand (18) des Verdichterdiffusor (16) befestigt ist,
wobei jede Entnahmeöffnung (42) im Bereich eines Ausgangs (28) des Verdichterdiffusors (16) vorgesehen und ein Teil einer der Stützen (40) ist.

2. Gasturbine (10) nach Anspruch 1,
bei der die Entnahmeöffnung (42) dem Verdichterdiffusorausgang (28) gegenüberliegt.

3. Gasturbine (10) nach Anspruch 1 oder 2,
bei der die Entnahmeöffnung (42) mittels eines Aufsatzes (41) gebildet ist.

4. Gasturbine (10) nach Anspruch 1, 2 oder 3,
bei der im Kühlluftentnahmekanal (38) eine Drosselstelle vorgesehen ist.

5. Gasturbine (10) nach einem der vorangehenden Ansprüche, bei der der Kühlluftentnahmekanal (38) als Entnahmerohr ausgebildet ist.

6. Gasturbine (10) nach Anspruch 5,
bei dem die Kühlluftentnahmekanäle (38) im Bereich der Stützen (40) aufgedickt sind.

7. Gasturbine (10) nach einem der Ansprüche 1 bis 4 oder 6,
bei der sich die innere Wand (18) über den Verdichterdiffusorausgang (28) hinaus in Richtung der Turbineneinheit erstreckt und
der Kühlluftentnahmekanal (38) an der nach außen gewandten Fläche (52) der inneren Wand (18) oder innerhalb der inneren Wand (18) angeordnet ist.

8. Gasturbine (10) nach einem der Ansprüche 1 bis 7,
bei der die Kühlluftentnahmekanäle (38) radial weiter innen angeordnet sind als die Brennkammer (12).

9. Gasturbine (10) nach einem der Ansprüche 1 bis 8,
bei der das äußere Ende der Stütze (40) an einem sich entlang der Maschinenachse (22) erstreckenden Ausleger (48) befestigt ist.

10. Gasturbine (10) nach einem der vorangehenden Ansprüche, bei der der Verdichterdiffusor (16) als Axialdiffusor mit im Wesentlichen geradlinigen, inneren und äußeren Wänden (18, 20) ausgebildet ist.

11. Gasturbine (10) nach einem der vorangehenden Ansprüche, die eine Anzahl von konzentrisch um die Maschinenachse angeordneten Rohrbrennkammern (12) umfasst.
